Europäisches Patentamt

European Patent Office

Office européen des brevets

(19)

(11) Numéro de publication : **0 425 647 B1**

(12) **FASCICULE DE BREVET EUROPEEN**

(45) Date de publication du fascicule du brevet :
**29.12.93 Bulletin 93/52**

(51) Int. Cl.$^5$ : **H01M 10/50,** H01M 10/40, B32B 31/24, H05B 3/00, C08J 7/00

(21) Numéro de dépôt : **90908236.4**

(22) Date de dépôt : **10.05.90**

(86) Numéro de dépôt international :
**PCT/FR90/00326**

(87) Numéro de publication internationale :
**WO 90/13925 15.11.90 Gazette 90/26**

(54) **PROCEDE DE CHAUFFAGE RAPIDE ET UNIFORME D'UN ENSEMBLE MULTICOUCHE COMPORTANT AU MOINS UNE COUCHE MINCE A BASE D'UN MATERIAU MACROMOLECULAIRE A CONDUCTION IONIQUE INTERCALEE ENTRE DEUX STRUCTURES A CONDUCTION ELECTRONIQUE ELEVEE.**

(30) Priorité : **10.05.89 FR 8906110**

(43) Date de publication de la demande :
**08.05.91 Bulletin 91/19**

(45) Mention de la délivrance du brevet :
**29.12.93 Bulletin 93/52**

(84) Etats contractants désignés :
**AT BE CH DE DK ES FR GB IT LI LU NL SE**

(56) Documents cités :
**EP-A- 0 108 179**
**FR-A- 903 078**
**FR-A- 2 531 300**
**GB-A- 2 065 027**
**GB-A- 2 164 466**
**US-A- 2 442 380**
**Journal of applied physics, vol. 57, no. 1, janvier 1985, American Institute of Physics, (Woodbury, New York, US), M. Watanabe et al.: "Ionoc Conductivity and mobility in Network Polymers from poly (prpylene oxide) containing Lithium Perchlorate"**
**Patent Abstracts of Japan, vol. 12, no. 337 (E-657)(3184), 12 septembre 1988; & JP-A-6 398 971**

(73) Titulaire : **SOCIETE NATIONALE ELF AQUITAINE**
**Tour Elf, 2, Place de la Coupole, La Défense 6**
**F-92400 Courbevoie (FR)**
Titulaire : **HYDRO-QUEBEC**
**75, Boulevard René Levesque Ouest**
**Montréal Québec H2Z 1A4 (CA)**

(72) Inventeur : **GAUTHIER, Michel**
**237, rue Saint-Ignace**
**La Prairie, Québec J5R 1V0 (CA)**
Inventeur : **RICOUX, Philippe**
**35, bd de l'Europe**
**F-69600 Oullins (FR)**
Inventeur : **MULLER, Daniel**
**12, rue Frédéric-Mistral**
**F-64000 Pau (FR)**

(74) Mandataire : **Boillot, Marc**
**SOCIETE NATIONALE ELF AQUITAINE**
**Division Propriété Industrielle Tour Elf**
**F-92078 Paris la Défense Cédex 45 (FR)**

EP 0 425 647 B1

## Description

L'invention a trait à un procédé de chauffage rapide et uniforme d'un ensemble multicouche comportant au moins une couche mince d'un matériau macromoléculaire à conduction ionique, ou d'un électrolyte solide polymère, qui est intercalée entre deux structures conduction électronique élevée de manière à être en contact intime avec lesdites structures.

Un groupe important d'ensembles multicouches du type précité est celui des générateurs électrochimiques de courant en couches minces, rechargeables ou non, parmi lesquels on peut mentionner les générateurs électrochimiques de courant, qui sont décrits dans la citation EP-A-0013199 et font appel à un matériau macromoléculaire à conduction ionique consistant en une solution solide d'un sel alcalin ionisable $M^+X^-$, notamment sel de lithium, au sein d'un matériau polymère plastique formé, au moins en partie, d'un ou plusieurs polymères et/ou copolymères de monomères comportant au moins un hétéroatome, notamment oxygène ou azote, apte à former des liaisons du type donneur-accepteur avec le cation $M^+$.

Les générateurs électrochimiques de courant en couches minces permettent de stocker une quantité importante d'énergie par unité de volume et de poids. La puissance qu'ils peuvent délivrer dépend directement de la mobilité des ions dans le matériau macromoléculaire a conduction ionique, c'est-à-dire de la conductivité ionique de ce matériau.

On sait que la conductivité ionique des matériaux macromoléculaires à conduction ionique utilisés dans les générateurs électrochimiques de courant en couches minces est relativement faible aux températures inférieures ou égales à la température ambiante, mais que ladite conductivité croît avec la température. Il est donc utile, lorsqu'on désire faire fonctionner de tels générateurs à une puissance instantanée élevée, de pouvoir en élever la température rapidement et si possible de façon homogène.

Ceci est particulièrement utile pour tirer le meilleur parti de générateurs très énergétiques, essentiellement primaires, conservés longtemps à des températures voisines ou inférieures à la température ambiante qui sont particulièrement favorables à une réduction voire une supression complète du phénomène d'autodécharge. De tels générateurs, chauffés rapidement, peuvent fournir instantanément des puissances extrêmement élevées même après plusieurs années de stockage, pour peu que l'on puisse les chauffer rapidement et de manière homogène juste avant leur utilisation intensive.

L'utilisation d'une source extérieure de chauffage pour réaliser le chauffage des générateurs de courant en couches minces précités ne permet pas d'arriver au résultat recherché, car une telle manière d'opérer entraîne l'apparition d'un gradient thermique à l'intérieur du générateur en raison de la mauvaise diffusion de la chaleur dans la structure multicouche formant le générateur, ce qui se traduit par un fonctionnement non homogène du générateur.

On a déjà proposé, comme décrit dans la citation GB-A-2 065 027, d'effectuer le chauffage d'une composition polymère se présentant en couche mince et renfermant un matériau macromoléculaire à conduction ionique consistant en un polyéther associé à un sel ionisable, en faisant appel à une technique de chauffage par pertes diélectriques, qui consiste à soumettre ladite composition à l'action d'ondes électromagnétiques de très hautes fréquences, à savoir de fréquences de l'ordre de $10^6$ à $10^8$ hertzs.

Une telle technique de chauffage par pertes diélectriques n'est pas adaptée au chauffage de générateurs électrochimiques de courant en couches minces tels que mentionnés plus haut, ni plus généralement au chauffage d'ensembles comportant au moins une couche mince d'un matériau macromoléculaire à conduction ionique intercalée en sandwich entre deux structures à conduction électronique élevée, car outre les difficultés liées à sa mise en oeuvre et les inconvénients qu'elle entraîne pour l'environnement par l'emploi de signaux électriques de très haute fréquence, cette technique se prête mal au chauffage de structures multicouches comportant plusieurs couches conduction électronique élevée proches les unes des autres.

L'invention a pour objet un procédé de chauffage rapide et uniforme d'un ensemble multicouche comportant au moins une couche mince d'un matériau macromoléculaire à conduction ionique ou électrolyte solide polymère intercalée entre deux structures à conduction électronique élevée de manière à être en contact intime avec lesdites structures, qui permet de remédier aux inconvénients des méthodes de chauffage par source extérieure de chauffage ou par pertes diélectriques.

Le procédé selon l'invention se caractérise en ce que l'on applique entre les structures à conduction électronique, situées de part et d'autre de chaque couche de matériau macromoléculaire à conduction ionique, un signal de tension électrique dont au moins une partie comporte une composante alternative, qui possède une fréquence inférieure à 5 kHz et une amplitude, c'est-a-dire une différence entre ses valeurs maximale et moyenne, comprise entre 0,05 et 100 volts, de manière à générer dans l'ensemble multicouche un courant ionique alternatif apte à produire un échauffement du matériau macromoléculaire à conduction ionique ou électrolyte solide polymère par effet Joule.

Avantageusement, la fréquence de la composante alternative du signal de tension électrique appliqué entre les structures à conduction électronique est plus particulièrement comprise entre 2 et 2000 Hz et se situe de préférence entre 10 et 500 Hz. En outre, les valeurs préférées de l'amplitude de ladite composante alternative sont comprise entre 0,05 et 30 volts.

La composante alternative du signal de tension électrique utilisé selon l'invention peut être sinusoidale ou non sinusoidale et être ininterrompue ou pulsée.

Cette composante alternative peut consister notamment en une tension électrique sinusoidale de fréquence égale à 50 ou 60 Hz générée à partir de la tension alternative sinusoidale fournie par les réseaux de distribution électrique.

L'homme de l'art saura aisément ajuster la puissance électrique à fournir aux bornes de tout ensemble multicouche du type précité à électrolyte solide polymère, que l'on désire chauffer, pour atteindre la température voulue en un temps déterminé en tenant compte de la taille et de la géométrie dudit ensemble multicouche à chauffer, de sa capacité calorifique et de sa déperdition de chaleur vers le milieu extérieur.

En effet, la puissance thermique dissipée dans l'électrolyte solide polymère, du fait du mouvement alternatif des ions qu'il renferme, est de la forme $U_A^2/Ri$, $U_A$ étant la valeur efficace de la composante alternative du signal de tension électrique appliqué et Ri représentant la résistance ionique de la couche d'électrolyte solide polymère de l'ensemble multicouche à chauffer. Cette même résistance ionique est donnée par la relation $Ri = K \times \dfrac{e}{S}$, dans laquelle K est la résistivité ionique de l'électrolyte solide polymère et e et S désignent respectivement l'épaisseur et la surface de la couche d'électrolyte solide polymère de l'ensemble multicouche. La puissance thermique dissipée dans l'électrolyte solide polymère est donc de la forme $U_A^2/Ri$ ou $K \times U_A^2 \times \dfrac{S}{e}$.

La tension alternative à appliquer à un ensemble multicouche pour le chauffer avec une puissance thermique donnée est donc d'autant plus faible que cet ensemble est de plus grande surface et de faible épaisseur. De même le chauffage d'un système de n ensembles multicouches identiques nécessite l'application d'une tension alternative qui est plus élevée (associée à une intensité moins élevée) lorsque ces n éléments sont connectés en série que lorsque ces n éléments sont connectés selon un montage en parallèle.

Au cours du chauffage de l'ensemble multicouche, l'intensité du courant alternatif, qui est généré au sein du matériau macromoléculaire à conduction ionique du fait de l'application du signal de tension électrique à composante alternative entre les structures à conduction électronique, a tendance à croître avec la température en raison de la diminution de la résistance du matériau à conduction ionique. Si besoin est, la température au sein dudit matériau à conduction ionique peut être contrôlée au cours du chauffage de l'ensemble multicouche pour ne pas dépasser une valeur prédéterminée, ledit contrôle pouvant être réalisé notamment soit en utilisant un signal de tension électrique dont la composante alternative a une valeur efficace constante et en limitant l'intensité du courant alternatif généré soit encore en maintenant constante l'intensité du courant alternatif passant dans le matériau à conduction ionique et en limitant l'amplitude de la composante alternative du signal de tension électrique. Ces techniques de régulation thermique de la température d'un conducteur sont bien connues dans l'art et ne seront donc pas décrites en détail.

Comme indiqué plus haut, l'ensemble multicouche que l'on chauffe par le procédé selon l'invention comporte au moins une couche mince d'un matériau macromoléculaire à conduction ionique intercalée en sandwich entre deux structures à conduction électronique élevée.

Par "couche mince" du matériau macromoléculaire à conduction ionique, on entend une couche dudit matériau dont l'épaisseur, qui correspond en fait à la distance séparant les deux structures à conduction électronique élevée situées de part et d'autre du matériau macromoléculaire à conduction ionique, est faible par rapport aux surfaces de contact de ce matériau macromoléculaire avec les couches adjacentes formées des structures à conduction électronique élevée. Avantageusement, l'épaisseur de la couche mince du matériau macromoléculaire à conduction ionique est comprise entre 5μm et 2000μm, ladite épaisseur devant être aussi régulière que possible.

Le matériau macromoléculaire à conduction ionique peut être l'un quelconque des matériaux à base de polymère susceptibles de présenter simultanément une conductivité ionique au moins égale à $10^{-7}$ siemens/cm à température ambiante et une conductivité électronique inférieure a $10^{-10}$ siemens/cm.

Le matériau macromoléculaire à conduction ionique peut en particulier consister en une solution solide d'au moins un sel ionisable, notamment sel de métal alcalin et en particulier sel de lithium, dans un matériau polymère plastique formé au moins en partie d'un ou plusieurs polymères et/ou copolymères de monomères comportant au moins un hétéroatome, notamment oxygène ou azote, apte à former des liaisons du type donneur/accepteur avec le cation du sel ionisable, le ou lesdits polymères étant en particulier choisis parmi les polyéthers et notamment parmi les homopolymères d'oxyde d'éthylène ou d'oxyde de propylène (cf. EP-A-0013199). Dans des perfectionnements apportés aux solutions solides du type précité, le matériau polymère plastique peut consister en particulier en un copolymère d'oxyde d'éthylène et d'au moins un autre oxyde cyclique, ledit copolymère ayant soit la structure d'un copolymère statistique (US-A-4578326) pouvant être éventuellement réticulé (FR-A-2570224) ou bien la forme d'un réseau du type uréthanne résultant de la réaction d'un copolymère séquencé d'oxyde d'éthylène et d'au moins un autre oxyde cyclique avec un agent couplant consistant en un polyisocyanate organique (FR-A-2485274). En outre, les sels ionisables mentionnés dans la citation EP-A-0013199 peuvent être remplacés en partie ou en totalité par des sels ionisables tels que closoboranes de métaux alcalins (FR-A-2523770), tétrakistrialkylsiloxyalanates de métaux alcalins (FR-A-2527611), bis(perhalogénoalkylsulfonyl) imidures ou bis(perhalogénoacyl) imidures de métaux alcalins (FR-A-2527602), tétraalkynylborates ou aluminates de métaux alcalins (FR-A-2527610), dérivés de métal alcalin des composés perhalogénoalkylsulfonylméthane ou perhalogénoacylméthane (FR-A-2606218) ou encore sels de métaux alcalins d'anions polyéthoxylés (EP-A-0213985).

Le matériau macromoléculaire à conduction ionique peut encore consister en une solution solide d'un sel ionisable, par exemple un sel tel que décrit dans les citations précitées, dans un matériau polymère constitué d'un polymère organométallique dans lequel au moins deux chaînes polyéthers sont reliées par un atome métallique choisi parmi Al, Zn et Mg (FR-A-2557735) ou parmi Si, Cd, B et Ti (FR-A-2565413) ou bien encore dans un matériau polymère formé d'un polyphosphazène portant sur chaque atome de phosphore deux groupements polyéthers tels que des groupements polyoxyéthylènes.

Le matériau macromoléculaire à conduction ionique peut être également choisis parmi les mélanges de polymères à caractère polaire et/ou solvatant avec tout sel, acide ou base suffisamment dissocié dans le polymère pour obtenir la conductivité ionique appropriée ou bien parmi les polymères porteurs de fonctions ionisables conduisant à des anions ou des cations fixés sur les chaînes macromoléculaires ou encore parmi les conducteurs protoniques tels que ceux décrits dans la citation FR-A-2593328 ou les mélanges de polymères inertes avec des matériaux à conduction ionique minéraux ou organiques dispersés dans la matrice polymère.

Par structure à conduction électronique élevée on entend selon l'invention tout matériau composite susceptible d'atteindre des conductivités électroniques supérieures à $10^{-8}$ siemens/cm. Il peut s'agir des divers matériaux généralement utilisés comme collecteurs d'électrode, c'est-à-dire en particulier des films, rubans, plaques en métal conducteur tel que Cu, Al, Ag, Ni, Zn ou encore en un matériau organique tel que polyacétylène, polypyrrole, polyanilines ou autre polymère insaturé dopé ou non par des composés ioniques. Il peut s'agir également de matériaux isolants tels que verres ou matières plastiques, revêtus de dépôts conducteurs, lesdits dépôts étant produits par diverses méthodes telles que métallisation, dépôt chimique sous vide, pulvérisation cathodique (sputtering) ou encore laminage.

La structure à conduction électronique peut également consister en un matériau composite dont l'un au moins des composants présente une conductivité électronique suffisante et à titre d'exemples on peut citer certaines électrodes composites, notamment celles décrites dans la citation EP-A-0013199, qui associent une substance conduction électronique comme le noir de carbone avec divers matériaux électrochimiquement actifs, de telles électrodes étant utilisées notamment dans les générateurs électrochimiques de courant primaires ou secondaires à électrolyte solide polymère en couches minces.

Comme indiqué précédemment le procédé selon l'invention est en particulier applicable pour le chauffage d'ensembles multicouches consistant en générateurs électrochimiques de courant rechargeables ou non rechargeables qui sont formés d'au moins une couche mince d'un électrolyte solide polymère, c'est-à-dire d'un matériau macromoléculaire à conduction ionique tel que défini précédemment, disposée en sandwich entre deux électrodes, qui constituent les structures à conduction électronique élevée et peuvent présenter tout agencentent convenable et en particulier l'agencement des électrodes composites décrit dans les citations auxquelles il est fait référence ci-dessus.

Les générateurs électrochimiques de courant du type précité sont utilisables notamment pour l'alimentation des moteurs électriques équipant divers appareils portatifs tels que perceuses, aspirateurs, coupes-haies, tondeuses à gazon, et, par suite de leur configuration souple, ils peuvent être disposés au contact des moteurs électriques dont ils assurent l'alimentation, ce qui permet de réaliser des appareils à générateurs de courant intégrés. Dans de telles applications des générateurs de courant susmentionnés en tant que générateurs intégrés, après que le générateur ait été porté à coeur à la température la plus appropriée pour son fonctionnement en faisant appel au procédé de chauffage selon l'invention, la chaleur générée, entre autres par la déperdition thermique du moteur électrique de l'appareil alimenté par le générateur, est suffisante, moyennant un contrôle de la gestion thermique du système, pour maintenir le générateur accolé au moteur dans une gamme de températures permettant le fonctionnement dudit générateur dans des conditions optimales. Par exemple, on peut disposer autour du moteur électrique d'une tondeuse à gazon un nombre suffisant de générateurs de courant à électrolyte solide polymère en couches minces pour constituer une batterie assurant une autonomie prédéterminée, par exemple deux à trois heures, de fonctionnement. En chauffant les générateurs à coeur, par le procédé selon l'invention, pendant leur recharge, s'ils sont rechargeables, ou/et juste avant leur utilisation, on peut disposer de plus de 80% de la capacité nominale de la batterie pendant la durée prédéterminée de fonctionnement.

Pour un générateur électrochimique de courant en couches minces tel que précité du type non rechargeable, la phase de chauffage dudit générateur par application du procédé selon l'invention peut être effectuée avant l'utilisation du générateur ou au début de ladite utilisation.

La tension électrique appliquée au générateur non rechargeable est avantageusement la somme d'une composante alternative telle que définie précédemment et d'une tension continue ayant une valeur au moins égale à la tension dudit générateur en circuit ouvert, lesdites tensions alternative et continue pouvant être appliquées simultanément et séparément ou encore sous la forme d'une tension unique résultant de leur somme.

Pour un générateur électrochimique de courant en couches minces tel que précité du type rechargeable, la phase de chauffage de ce générateur par le procédé selon l'invention peut être réalisée soit comme indiqué ci-dessus pour un générateur électrochimique de courant en couches minces non rechargeable ou/et pendant au moins une partie du cycle de recharge du générateur. Dans le cas d'un chauffage effectué pendant le cycle de recharge du générateur, la tension électrique appliquée au générateur c recharger est avantageusement la somme d'une tension ou composante alternative telle que définie plus haut et d'une tension électrique continue de valeur au moins égale à la tension nominale du générateur chargé, lesdites tensions alternative et continue pouvant être appliquées simultanément et séparement ou bien sous la forme d'une tension unique résultant de leur somme. Le chauffage du générateur pendant les cycles de recharge permet de diminuer substantiellement le temps de recharge.

Lorsque l'on associe plusieurs générateurs électrochimiques de courant en couches minces du type mentionné plus haut pour constituer le générateur de courant, on peut produire à partir de l'un au moins desdits générateurs élémentaires, éventuellement en alternance, la tension alternative utilisable pour chauffer les autres générateurs élémentaires.

Le procédé selon l'invention peut encore s'appliquer au chauffage superficiel d'éléments de formes diverses, dont la surface est pourvue d'un ensemble multicouche comportant une couche mince d'un électrolyte solide polymère consistant en un matériau macromoléculaire à conduction ionique tel que défini précédemment intercalée entre deux couches conductrices de l'électricité constituant des structures à conduction électronique élevée comme indiqué plus haut la tension appliquée entre lesdites structures étant dans ce cas purement alternative.

Ainsi on peut réaliser des systèmes de chauffage domestique par panneaux radiants, dont on sait qu'ils permettent à la fois un confort amélioré et des économies substantielles d'énergie. Par exemple, dans ce type d'application, on peut constituer l'ensemble multicouche sous la forme d'une tapisserie chauffante obtenue en accolant à une feuille de papier métallisé, pouvant être collée sur murs et cloisons comme un papier peint ordinaire, une couche mince du matériau macromoléculaire à conduction ionique puis une couche d'un matériau également bon conducteur électronique comme, par exemple, une deuxième feuille de papier ou de matière plastique métallisé ou une feuille fine en un métal conducteur électronique. Cette technique de chauffage faisant appel au procédé selon l'invention présente un certain nombre d'avantages parmi lesquels on peut mentionner l'utilisation de très bas voltages sans danger pour un usage domestique, la tolérance d'une déchirure partielle de la tapisserie chauffante sans en modifier la puissance nominale, la possibilité de percer et de clouer sans danger car le court-circuit créé temporairement entraîne la destruction locale de l'un des revêtements conducteurs avec cicatrisation locale naturelle par le matériau macromoléculaire à conduction ionique (électrolyte solide polymère), la proportion de surface détruite étant négligeable par rapport à la surface totale de l'ensemble multicouche constituant la tapisserie chauffante.

Lorsque l'élément à chauffer superficiellement présente une surface irrégulière, on réalise l'ensemble multicouche à la surface dudit élément par des techniques de mise en peinture en opérant, par exemple, comme suit. On dépose tout d'abord sur ladite surface, par exemple en phase solvant ou par pistolage électrostatique, une couche d'un matériau conducteur électronique choisi parmi les poudres métalliques, le noir de carbone et les polymères conducteurs, notamment polymères porteurs de liaisons insaturées conjuguées tels que cités précédemment et l'on réserve sur la surface conductrice ainsi réalisée une petite zone, qui sera protégée du revêtement par les couches suivantes et qui est destinée a la prise de contact de l'électrode formée par la couche du matériau conducteur électronique ainsi formée. Une deuxième couche mince du matériau macromoléculaire à conduction ionique est ensuite déposée sur la couche du matériau conducteur électronique par toute technique appropriée, par exemple pistolage, trempage ou enduction. Sur cette deuxième couche est enfin déposée une troisième couche d'un matériau conducteur électronique tel qu'indiqué plus haut, cette troisième couche jouant le rôle de seconde électrode. Sur cette couche on ménage une zone permettant de réaliser une connexion électrique avec la source de tension alternative, ladite connexion pouvant être réalisée, par exemple, par soudure ou application locale d'une pâte conductrice telle que, notamment une résine époxy chargée d'argent. On peut éviter le dépôt de la première couche conductrice sur la surface de l'élément a chauffer superficiellement lorsque ladite surface possède déjà une conductivité électronique suffisante pour jouer le rôle de première électrode.

La tension alternative utilisable pour réaliser le chauffage de l'ensemble multicouche peut être générée par toute source de tension alternative connue susceptible de délivrer une tension électrique alternative ayant la forme d'un signal ininterrompu ou d'un signal pulsé présentant les caractéristiques de fréquence et d'amplitude définies précédemment. Lorsque l'ensemble multicouche est du type générateur de courant, la source de tension alternative peut être intégrée dans ledit générateur ou bien dans l'appareil utilisant ce générateur ou encore dans le chargeur utilisé pour recharger le générateur.

Les exemples suivants sont donnés à titre non limitatif pour illustrer l'invention.

EXEMPLE 1 :

Afin de démontrer la réversibilité des phénomènes mis en jeu par application du procédé selon l'invention, on a réalisé un dispositif de 4 cm² mettant en contact, sur chacune des faces d'un film d'électrolyte solide polymère de 50μm d'épaisseur, une électrode composite épaisse de 20μm et formée de noir d'acétylène dispersé dans un électrolyte solide polymère de même nature que celui du film, ladite électrode étant supportée par un feuillard d'aluminium de 25μm d'épaisseur. L'électrolyte solide polymère consistait en une solution solide de perchlorate de lithium dans un copolymère de l'oxyde d'éthylène et de méthylglycidyléther, ledit copolymère renfermant 90 % molaire d'oxyde d'éthylène et ladite solution solide présentant un rapport molaire des atomes d'oxygène des fonctions éthers aux ions lithium ayant une valeur d'environ 20.

Le dispositif ainsi constitué, dont la f.e.m. était au départ de 0 Volt et la température était égale à 23°C, était isolé thermiquement et mis en contact avec un thermocouple miniaturisé pour pouvoir suivre rapidement tout effet thermique généré. Les collecteurs des électrodes étaient reliés aux bornes d'un rhéostat fonctionnant à 60 cycles/seconde et réglé à 10 Volts de sortie. Dès la mise en marche du rhéostat la température montait rapidement pour atteindre environ 60°C après environ 30 secondes. L'essai était répété plusieurs fois et le même effet était observé. Lorsque le rhéostat était réglé à 20 Volts la température précitée était atteinte après environ 10 secondes et le courant alternatif observé passait d'environ 60 mA à environ 150-200 mA. Lorsque le signal alternatif était maintenu plus longtemps que les temps indiqués ci-dessus, le courant avait tendance à augmenter par suite d'une diminution de la résistance interne du dispositif. Lorsque la f.e.m. était vérifiée après ces divers essais, le voltage observé était toujours de 0 Volt. Ceci, de même que la résistance interne qui demeure inchangée à 24°C, confirme que les effets sont réversibles et qu'aucun dommage permanent n'a été produit. La puissance dissipée dans un tel dispositif a donc été de l'ordre de 0,6 Watt pour une surface utilisée d'environ 4 cm².

EXEMPLE 2 :

On réalisait un générateur de courant au lithium en couche mince consistant en une couche d'un électrolyte solide polymère insérée en sandwich entre une électrode positive et une électrode négative.

La couche d'électrolyte solide polymère avait une épaisseur de 40μm et était constituée d'une solution solide à 10% en poids de perchlorate de lithium dans un copolymère d'oxyde d'éthylène et de méthylglycidyléther, ledit copolymère renfermant, en poids, 80% d'oxyde d'éthylène.

L'électrode positive résultait de l'agglomération, en une masse homogène, de poudre de sulfure de titane, de noir de carbone et d'un électrolyte solide polymère consistant en la solution solide précitée de manière à avoir un contenu de lithium sur l'électrode correspondant à 4 Coulombs/cm², soit environ 0,29 mg/cm² de lithium, ladite électrode étant déposée sur un collecteur constitué d'une feuille d'aluminium ayant une épaisseur égale à 20μm.

L'électrode négative était formée d'une feuille de lithium de 20μm d'épaisseur laminée sur un collecteur de courant consistant en un feuillard de cuivre de 12μm d'épaisseur.

L'ensemble du générateur, d'une surface de 20 cm², était scellé dans un emballage métalloplastique souple à base de feuilles minces contrecollées de polyester, d'aluminium et de polyéthylène. Cet emballage permet à la fois la prise de contact des électrodes positive et négative et assure un rôle de matériau barrière à l'eau et à l'oxygène permettant au générateur de fonctionner pendant de nombreux cycles de charge-décharge.

Le générateur ainsi constitué avait une tension moyenne de 2.1 volts qui évoluait de 3,5 à 1,6 volts en cours de décharge normale et il permettait d'obtenir une utilisation correcte de la capacité électrique installée égale à 80 coulombs, ce qui correspond à 22,2 milliampères-heure, pour tout régime de décharge inférieur à 2 milliampères, soit pour toute décharge du générateur sur une durée supérieure à 10 heures. En réalisant des décharges du générateur consommant davantage de courant, on observait une chute rapide du taux d'utilisation de la capacité électrique dudit générateur dont on ne pouvait plus utiliser que 50 % pour une décharge sous 4 milliampères, 20% pour une décharge sous 10 milliampères et 5% pour une décharge sous 20 milliampères.

Au générateur réalisé comme indiqué ci-dessus, on appliquait, avant de le soumettre à une décharge, un signal électrique de tension résultant de la superposition d'une tension alternative ayant une amplitude de 3 volts et une fréquence égale à 50 hertz et d'une tension continue égale à 2,5 volts en opérant de telle sorte que la borne positive du générateur était reliée à la phase alternative de plus haut voltage moyen. L'application de ladite tension alternative entraînait en quelques minutes une élévation de la température du générateur de 22°C à 60°C. Dès lors le générateur pouvait produire un courant moyen de 8 milliampères correspondant à une décharge totale en 2 heures (C/2). En disposant d'une isolation ou d'une inertie thermique suffisante pour maintenir le générateur à une température supérieure à 30°C, un tel courant pouvait être maintenu pendant une centaine de minutes (soit environ 80 % de la capacité totale du générateur). Sans réaliser le chauffage selon l'invention, l'utilisation du générateur à ce même régime de décharge à température ambiante ne durait qu'environ 20 minutes pour une tension finale de 1,6 volts, ce qui correspond à une utilisation de moins de 15 % de la capacité du générateur.

EXEMPLE 3 :

Le générateur tel que décrit dans l'exemple 2 nécessitait une durée de recharge d'au moins dix heures sous un régime constant de 2,2 milliampères pour obtenir une recharge complète, à température ambiante, à sa capacité C égale à 4 coulombs/cm². En imposant à 25°C une recharge plus rapide par l'emploi d'une intensité plus élevée tout en maintenant le seuil maximal de tension de recharge à 3,5 volts, on observait une montée plus rapide de ce voltage en fin de charge, correspondant à la fin de la recharge possible, avec comme résultat une quantité moindre d'énergie stockée.
En d'autres termes, on est limité à des régimes de recharge inférieurs ou égaux à C/10 si l'on veut atteindre sans dommage des recharges complètes a température ambiante.

On soumettait le générateur déchargé à un signal alternatif ayant une fréquence de 50 Hertz et une amplitude de 4 Volts superposé à une tension continue égale à la tension propre du générateur déchargé. On observait une élévation rapide de la température vers 50-60°C, ce qui permettait alors de recharger pleinement le générateur à des régimes cinq fois plus rapides pendant une durée cinq fois plus courte que lorsque le générateur est maintenu à température ambiante. Il était ainsi possible d'effectuer en deux heures, en appliquant après chauffage une intensité moyenne de 11 milliampères, la recharge complète du générateur, qui ne pouvait être effectuée qu'en 10 heures au moins à température ambiante.

On obtenait des résultats comparables aux résultats précités selon l'invention en soumettant le générateur déchargé à une recharge en faisant appel à un chargeur potentiostatique (chargeur à tension constante), qui appliquait entre les électrodes du générateur un signal de tension électrique résultant de la superposition de la tension alternative précitée d'amplitude égale à 4 volts et de fréquence égale à 50 hertz à une tension continue de recharge fixée à 3,5 volts.

EXEMPLE 4 :

On réalisait des tapisseries chauffantes en associant une feuille de papier de 150μm d'épaisseur métallisée sur une face par une épaisseur de cuivre de 1 à 20μm, une couche d'un électrolyte solide polymère ayant une épaisseur comprise entre 5μm et 100 μm, ledit électrolyte consistant en une solution solide à 10 % en poids de KSCN dissous dans un copolymère d'oxyde d'éthylène et d'oxyde de butylène à 70% en poids d'oxyde d'éthylène, et une feuille de 20μm d'épaisseur de polypropylène métallisée sur une face par dépôt sous vide d'une très fine couche d'un métal bon conducteur tel que le cuivre, de manière a constituer des ensembles multicouches dans lesquels la couche d'électrolyte solide polymère était disposée entre les deux feuilles métallisées et adhérait fortement au dépôt métallique présent sur chacune desdites feuilles.

Le collage de la couche d'électrolyte solide polymère en contact avec les dépôts métalliques présents sur les feuilles métallisées était réalisé par couchage sur le papier métallisé de la couche d'électrolyte, en opérant par extrusion à l'état fondu ou encore par enduction à partir d'une solution du sel et du copolymère dans un solvant commun et évaporation dudit solvant, pour former un complexe papier métallisé/électrolyte solide polymère, puis par lamination dudit complexe avec la feuille de polypropylène métallisé, ces opérations étant réalisées de façon à ce que chacun des dépôts métalliques en regard de la couche d'électrolyte déborde légèrement de part ou d'autre de la surface de contact avec l'électrolyte pour former une languette de conducteur métallique libre débordant de l'ensemble multicouche obtenu. Les ensembles multicouches, constitués comme décrit ci-dessus, étaient collés, côté feuille de papier, sur des panneaux de plâtre pour constituer des panneaux radiants.

Pour chacun des panneaux ainsi obtenus, on appliquait entre les dépôts conducteurs métalliques de l'ensemble multicouche du panneau considéré, par l'intermédiaire des languettes associées, une tension alternative ayant selon les essais une amplitude comprise entre 5 et 20 volts et une fréquence allant de 10 à 100 hertz et l'on observait une élévation rapide de la température de l'ensemble multicouche, qui dissipait dans le milieu environnant la chaleur résultant de cette élévation de température.

La puissance dissipée, qui correspond au produit de l'intensité fournie sous une tension donnée multipliée par ladite tension, dépend directement de la tension appliquée.

Cette intensité est proportionnelle à la surface du revêtement chauffant, à la conductivité ionique de l'électrolyte solide polymère et inversement proportionnelle à l'épaisseur dudit électrolyte. La puissance dissipée se situe généralement des valeurs inférieures a 0,05 watt par cm² soit encore 5 milliampères par cm² pour une tension alternative de 10 volts.

L'élévation de température au cours du chauffage dépend de la puissance électrique dissipée par effet Joule ainsi que de la capacité calorifique et de la conductivité thermique du support sur lequel est fixé l'ensemble multicouche chauffant.

On peut encore réaliser des revêtements chauffants sous la forme d'ensembles multicouches transparents dans lesquels une couche d'un électrolyte solide polymère tel que défini précédemment et transparent aux épaisseurs de couche utilisées, est disposée en sandwich entre deux supports collecteurs de courant transparents consistant chacun en une feuille transparente portant un dépôt transparent conducteur de courant sur sa face tournée vers l'électrolyte solide polymère, ladite couche d'électrolyte solide polymère adhérant fortement au dépôt conducteur transparent de chacun desdits supports collecteurs de courant. On peut obtenir ces supports collecteurs de courant transparents, par exemple, par dépôt sous vide de très fines couches d'oxydes métalliques du type oxyde mixte d'étain et d'indium (en abrégé ITO) ou encore oxyde d'étain dopé sur des films transparents en une matière plastique, notamment films à base de polypropylène ou de polyester. Avantageusement l'électrolyte solide polymère peut consister en une solution solide d'au moins un sel ionisable dans un matériau polymère formé au moins en partie d'un ou plusieurs copolymères d'oxyde déthylène et d'au moins un autre éther cyclique.

De tels revêtements chauffants, qui sont susceptibles d'être chauffés par application d'une tension alternative selon l'invention entre les dépôts conducteurs des collecteurs de courant disposés de part et d'autre de la couche d'électrolyte solide polymère, peuvent être appliqués, par exemple par collage, sur des systèmes optiques supports tels que les vitrages domestiques ou d'automobiles, les rétroviseurs, les miroirs ou encore les divers systèmes de signalisation lumineuse pour assurer le chauffage desdits systèmes optiques aux fins de dégivrage et/ou de désembuage sans nuire sensiblement aux qualités optiques propres de ces systèmes optiques. L'association du système optique support, notamment support transparent tel que vitrage, ou support réfléchissant, notamment rétroviseur ou miroir, et du revêtement transparent chauffant constitue un ensemble que l'on peut qualifier de système optique à température réglable.

## Revendications

1. Procédé de chauffage rapide et uniforme d'un ensemble multiccuche comportant au moins une couche mince d'un matériau macromoléculaire à conduction ionique, ou électrolyte solide polymère, intercalée entre deux structures à conduction électronique élevée de manière à être en contact intime avec lesdites structures, ledit procédé se caractérisant en ce que l'on applique entre les structures à conduction électronique élevée, situées de part et d'autre de chaque couche de matériau macromoléculaire à conduction ionique, un signal de tension électrique dont au moins une partie comporte une composante alternative, qui possède une fréquence inférieure à 5 kHz et une amplitude, c'est-à-dire une différence entre ses valeurs maximale et moyenne, comprise entre 0,05 et 100 volts, de manière à générer dans l'ensemble multicouche un courant ionique alternatif apte à produire un échauffement du matériau macromoléculaire à conduction ionique ou électrolyte solide polymère par effet Joule.

2. Procédé selon la revendication 1, caractérisé en ce que la fréquence de la composante alternative du signal de tension électrique appliqué entre les structures à conduction électronique élevée est comprise entre 2 et 2000 Hz et se situe de préférence entre 10 et 500 Hz.

3. Procédé selon la revendication 1 ou 2, caractérisé en ce que l'amplitude de la composante alternative du signal de tension électrique appliqué entre les structures à conduction électronique élevée est comprise entre 0,05 et 30 volts.

4. Procédé selon l'une des revendications 1 à 3, caractérisé en ce que la composante alternative de tension est un signal ininterrompu et notamment un signal sinusoidal ou encore un signal discontinu.

5. Procédé selon l'une des revendications 1 à 4, caractérisé en ce que l'on contrôle la température au sein du matériau macromoléculaire à conduction ionique pour ne pas dépasser une température prédéterminée, ledit contrôle étant réalisé soit en utilisant un signal de tension électrique dont la composante alternative a une valeur efficace constante et en limitant l'intensité du courant alternatif généré ou bien en maintenant constante l'intensité du courant alternatif passant dans le matériau conduction ionique et en limitant l'amplitude de la composante alternative du signal de tension électrique.

6. Procédé selon l'une des revendications 1 à 5, caractérisé en ce que la couche mince du matériau macromoléculaire à conduction ionique de l'ensemble multicouche a une épaisseur comprise entre 5μm et 2000μm.

**7.** Procédé selon l'une des revendications 1 à 6, caractérisé en ce que le matériau macromoléculaire à conduction ionique présente simultanément une conductivité ionique au moins égale à $10^{-7}$ siemens/cm à température ambiante et une conductivité électronique inférieure à $10^{-10}$ siemens/cm.

**8.** Procédé selon la revendication 7, caractérisé en ce que le matériau macromoléculaire à conduction ionique consiste en une solution solide d'au moins un sel ionisable, notamment sel de métal alcalin et en particulier sel de lithium, dans un matériau polymère plastique formé au moins en partie d'un ou plusieurs polymères et/ou copolymères de monomères comportant au moins un hétéroatome, notamment oxygène ou azote, apte à former des liaisons du type donneur/accepteur avec le cation du sel ionisable, le ou lesdits polymères ou copolymères étant en particulier des polyéthers et notamment des homopolymères d'oxyde d'éthylène ou d'oxyde de propylène ou des copolymères d'oxyde d'éthylène et d'au moins un autre éther cyclique.

**9.** Procédé selon la revendication 7, caractérisé en ce que le matériau macromoléculaire à conduction ionique consiste en une solution solide d'un sel ionisable dans un polymère choisi parmi les polymères organométalliques dans lesquels au moins deux chaînes polyéthers sont reliées par un atome métallique choisi parmi Al, Zn, Mg, Si, Cd, B et Ti ou parmi les polyphosphazènes portant sur chaque atome de phosphore deux groupements polyéthers et notamment deux groupements polyoxyéthylènes.

**10.** Procédé selon la revendication 7, caractérisé en ce que le matériau macromoléculaire à conduction ionique est choisi parmi les mélanges de polymères à caractère polaire ou/et solvatant avec tout sel, acide ou base suffisamment dissocié dans le polymère pour obtenir la conductivité ionique désirée, les polymères porteurs de fonctions ionisables conduisant à des anions ou des cations fixés sur les chaînes macromoléculaires, les conducteurs protoniques polymères et les mélanges de polymères inertes avec des matériaux à conduction ionique minéraux ou organiques dispersés dans la matrice polymère.

**11.** Procédé selon l'une des revendications 1 à 10, caractérisé en ce que les structures conduction électronique sont en matériaux présentant des conductivités électroniques supérieures à $10^{-8}$ siemens/cm.

**12.** Procédé selon l'une des revendications 1 à 11, caractérisé en ce que l'ensemble multicouche soumis au chauffage consiste en un générateur électrochimique de courant rechargeable ou non rechargeable, qui est formé d'au moins une couche mince du matériau macromoléculaire à conduction ionique, ou électrolyte solide polymère, disposée en sandwich entre deux électrodes, qui constituent les structures à conduction électronique élevée.

**13.** Procédé selon la revendication 12, caractérisé en ce que le générateur électrochimique de courant est rechargeable ou non rechargeable et en ce que la phase de chauffage dudit générateur est effectuée avant son utilisation ou au début de cette dernière.

**14.** Procédé selon la revendication 13, caractérisé en ce que la tension électrique utilisée pour le chauffage est la résultante de la composante alternative de tension et d'une tension continue ayant une valeur au moins égale à la tension du générateur en circuit ouvert.

**15.** Procédé selon la revendication 14, caractérisé en ce que lesdites tensions alternative et continue sont appliquées simultanément et séparément ou bien sous la forme d'une tension unique résultant de leur superposition.

**16.** Procédé selon la revendication 12, caractérisé en ce que le générateur électrochimique de courant est rechargeable et en ce que la phase de chauffage dudit générateur est effectuée pendant au moins une partie du cycle de recharge du générateur.

**17.** Procédé selon la revendication 16, caractérisé en ce que la tension électrique utilisée pour le chauffage est la résultante de la composante alternative de tension et d'une tension continue ayant une valeur au moins égale à la tension nominale du générateur chargé.

**18.** Procédé selon la revendication 17, caractérisé en ce que lesdites tensions alternative et continue sont appliquées simultanément et séparement ou bien sous la forme d'une tension unique résultant de leur superposition.

**19.** Procédé selon la revendication 12, caractérisé en ce que l'on associe plusieurs générateurs électrochimiques en couches minces pour constituer un générateur de courant et en ce que l'on utilise au moins l'un desdits générateurs électrochimiques, éventuellement en alternance, pour produire la tension alternative utilisable pour chauffer les autres générateurs.

20. Procédé selon l'une des revendications 1 à 11, caractérisé en ce que l'ensemble multicouche comporte une couche mince de l'électrolyte solide polymère ou matériau macromoléculaire à conduction ionique intercalée entre deux couches conductrices de l'électricité constituant des structures à conduction électronique élevée et se trouve disposé à la surface d'un élément de forme quelconque que l'on désire chauffer superficiellement et en ce que la tension appliquée entre les structures à conduction électronique élevée est uniquement alternative.

21. Procédé selon la revendication 20, caractérisé en ce que les couches conductrices de l'électricité de l'ensemble multicouche disposé à la surface de l'élément à chauffer superficiellement sont des feuilles de papier ou de matière plastique dont la face au contact de l'électrolyte solide polymère est pourvue d'un dépôt conducteur et, par exemple, d'un dépôt métallique.

22. Procédé selon la revendication 20, caractérisé en ce que l'ensemble multicouche est formé à la surface de l'élément à chauffer superficiellement par des techniques de mise en peinture.

23. Procédé selon la revendication 22, caractérisé en ce que la surface de l'élément à chauffer superficiellement possède une conductivité électronique suffisante pour jouer le rôle d'électrode et en ce que l'on dépose seulement sur ladite surface la couche d'électrolyte solide polymère et sur cette dernière la couche correspondante conductrice de l'électricité.

## Patentansprüche

1. Verfahren zur raschen und gleichmäßigen Erwärmung eines mehrlagigen Schichtkörpers, der wenigstens eine dünne Schicht eines makromolekularen Stoffes mit Ionenleitung bzw. eines festen polymeren Elektrolyten umfaßt, die zwischen zwei Strukturen angeordnet ist, die erhöhte Elektronenleitung aufweisen, um zwischen den Strukturen einen engen Kontakt herzustellen, dadurch **gekennzeichnet,** daß man zwischen den Strukturen mit erhöhter Elektronenleitung, die auf beiden Seiten jeder Schicht des makromolekularen Stoffes mit Ionenleitung angeordnet sind, ein elektrisches Spannungssignal anlegt, bei dem zumindest ein Teil eine Wechselspannungskomponente mit einer Frequenz von unter 5 kHz und einer Schwankungsbreite, d.h. einer Differenz zwischen dem Maximal- und Durchschnittsspannungswert zwischen 0,05 und 100 V darstellt, um auf diese Weise im mehrlagigen Schichtkörper einen Ionenwechselstrom zu erzeugen, der eine Erwärmung des makromolekularen Stoffes mit Ionenleitung bzw. des festen polymeren Elektrolyten durch den Jouleeffekt zu bewirken vermag.

2. Verfahren nach Anspruch 1, dadurch **gekennzeichnet,** daß die Frequenz der Wechselspannungskomponente des zwischen den Strukturen mit erhöhter Elektronenleitung angelegten elektrischen Spannungssignals zwischen 2 und 2000 Hz und vorzugsweise zwischen 10 und 500 Hz beträgt.

3. Verfahren nach Anspruch 1 oder 2, dadurch **gekennzeichnet,** daß die Schwankungsbreite der Wechselspannungskomponente des zwischen den Strukturen mit erhöhter Elektronenleitung angelegten elektrischen Spannungssignals zwischen 0,05 und 30 V beträgt.

4. Verfahren nach einem der Ansprüche 1 bis 3, dadurch **gekennzeichnet,** daß die Wechselspannungskomponente ein kontinuierliches Signal und insbesondere ein sinusförmiges Signal oder auch ein diskontinuierliches Signal ist.

5. Verfahren nach einem der Ansprüche 1 bis 4, dadurch **gekennzeichnet,** daß man die Temperatur im Inneren des makromolekularen Stoffes mit Ionenleitung so steuert, daß sie nicht eine vorgegebene Temperatur überschreitet, wobei die Steuerung entweder durch Verwendung eines elektrischen Spannungssignals, dessen Wechselspannungskomponente einen konstanten Effektivwert aufweist, und durch Begrenzung der Stärke des erzeugten Wechselstroms oder durch Konstanthaltung der Stärke des im Stoff mit Ionenleitung fließenden Wechselstroms und Begrenzung der Schwankungsbreite der Wechselspannungskomponente des elektrischen Spannungssignals erfolgt.

6. Verfahren nach einem der Ansprüche 1 bis 5, dadurch **gekennzeichnet,** daß die dünne Schicht des makromolekularen Stoffes mit Ionenleitung des mehrlagigen Schichtkörpers eine Dicke zwischen 5 und 2000 μm aufweist.

7. Verfahren nach einem der Ansprüche 1 bis 6, dadurch **gekennzeichnet,** daß der makromolekulare Stoff mit Ionenleitung gleichzeitig eine Ionenleitfähigkeit von wenigstens $10^{-7}$ Siemens/cm bei Umgebungstemperatur und eine Elektronenleitfähigkeit von unter $10^{-10}$ Siemens/cm aufweist.

8. Verfahren nach Anspruch 7, dadurch **gekennzeichnet,** daß der makromolekulare Stoff mit Ionenleitfähigkeit in einer festen Lösung wenigstens eines ionisierbaren Salzes, insbesondere eines Alkalimetallsalzes und vorzugsweise eines Lithiumsalzes in einem polymeren Kunststoffmaterial besteht, das wenigstens zum Teil aus einem oder mehreren Polymeren und/oder Copolymeren von Monomeren gebildet wird, die wenigstens ein Heteroatom, insbesondere Sauerstoff oder Stickstoff enthalten, wobei dieses Material zur Bildung von Bindungen vom Donator- und Akzeptor-Typ mit dem Kation des ionisierbaren Salzes befähigt ist, und das Polymer oder Copolymer bzw. die Polymere oder Copolymere, insbesondere Polyether und vorzugsweise Homopolymere von Ethylen- oder Propylenoxid oder Copolymere von Ethylenoxid und wenigstens einem anderen cyclischen Ether sind.

9. Verfahren nach Anspruch 7, dadurch **gekennzeichnet,** daß der makromolekulare Stoff mit Ionenleitung in einer festen Lösung eines ionisierbaren Salzes in einem Polymer besteht, ausgewählt unter metallorganischen Polymeren, bei denen wenigstens zwei Polyetherketten über ein Metallatom, ausgewählt unter Al, Zn, Mg, Si, Cd, B und Ti, verknüpft sind bzw. unter Polyphosphazenen, die pro Phosphoratom zwei Polyethergruppen und insbesondere zwei Polyoxyethylengruppen enthalten.

10. Verfahren nach Anspruch 7, dadurch gekennzeichnet, daß der makromolekulare Stoff mit Ionenleitung ausgewählt wird unter den Gemischen von polaren oder/und solvatisierenden Polymeren mit jedem Salz oder jeder Säure oder Base, das oder die im Polymer ausreichend dissoziert ist, um zur erwünschten Ionenleitfähigkeit zu gelangen, den ionisierbare Funktionen tragenden Polymeren, die zu auf den makromolekularen Ketten fixierten Anionen oder Kationen führen, den polymeren protonenleitern und den Gemischen aus inerten Polymeren und anorganischen oder organischen Stoffen mit Ionenleitung, die in der Polymermatrix dispergiert sind.

11. Verfahren nach einem der Ansprüche 1 bis 10, dadurch **gekennzeichnet,** daß die elektronisch leitenden Strukturen aus Stoffen mit elektronischer Leitfähigkeit von über $10^{-8}$ Siemens/cm bestehen.

12. Verfahren nach einem der Ansprüche 1 bis 11, dadurch **gekennzeichnet,** daß der der Erwärmung unterworfene mehrlagige Schichtkörper aus einem elektrochemischen wiederaufladbaren oder nicht wiederaufladbaren Stromerzeuger besteht, der aus wenigstens einer dünnen Schicht des ionisch leitenden makromolekularen Materials bzw. einem polymeren festen Elektrolyten besteht, wobei diese Schicht in Sandwichform zwischen zwei Elektroden angeordnet ist, welche die Strukturen mit erhöhter Elektronenleitung bilden.

13. Verfahren nach Anspruch 12, dadurch **gekennzeichnet,** daß der elektrochemische Stromerzeuger wiederaufladbar oder nicht wiederaufladbar ist und die Phase der Erwärmung des Stromerzeugers vor seiner Verwendung oder bei deren Beginn durchgeführt wird.

14. Verfahren nach Anspruch 13, dadurch **gekennzeichnet,** daß die für die Erwärmung eingesetzte elektrische Spannung die Resultierende aus der Wechselspannungskomponente und einer Gleichspannung ist, die einen Wert aufweist, der zumindest der Spannung des Stromerzeugers bei offenem Stromkreis entspricht.

15. Verfahren nach Anspruch 14, dadurch **gekennzeichnet,** daß Wechsel- und Gleichspannung gleichzeitig und getrennt oder in Form einer einzigen aus ihrer Überlagerung resultierenden Spannung angelegt werden.

16. Verfahren nach Anspruch 12, dadurch **gekennzeichnet,** daß der elektrochemische Stromerzeuger wiederaufladbar ist und die Phase der Erwärmung des Stromerzeugers zumindest während eines Teils des Vorgangs der Wiederaufladung des Stromerzeugers durchgeführt wird.

17. Verfahren nach Anspruch 16, dadurch **gekennzeichnet,** daß die für die Erwärmung eingesetzte elektrische Spannung die Resultierende aus der Wechsel- und einer Gleichspannung ist, die einen Wert aufweist, der zumindest der Nennspannung des aufgeladenen Stromerzeugers entspricht.

18. Verfahren nach Anspruch 17, dadurch **gekennzeichnet,** daß die Wechsel- und Gleichspannung gleichzeitig und getrennt oder in Form einer einzigen aus ihrer Überlagerung resultierenden Spannung angelegt werden.

19. Verfahren nach Anspruch 12, dadurch **gekennzeichnet,** daß man mehrere elektrochemische Generatoren in dünnen Schichten miteinander verbindet, um einen Stromerzeuger zu bilden, und man wenigstens einen der elektrochemischen Generatoren gegebenenfalls alternierend einsetzt, um die für die Erwärmung der übrigen Generatoren einsetzbare Wechselspannung zu erzeugen.

20. Verfahren nach einem der Ansprüche 1 bis 11, dadurch **gekennzeichnet,** daß der mehrlagige Schichtkörper eine dünne Schicht aus einem polymeren festen Elektrolyten oder einem makromolekularen Stoff mit Ionenleitung umfaßt, wobei diese Schicht zwischen zwei stromleitenden Schichten angeordnet ist, welche Strukturen mit erhöhter elektronischer Leitung bilden, und sich auf der Oberfläche eines Elements von beliebiger Form befindet, das man oberflächlich zu erwärmen wünscht, und daß die angelegte Spannung zwischen den Strukturen mit erhöhter elektronischer Leitung ausschließlich eine Wechselspannung ist.

21. Verfahren nach Anspruch 20, dadurch **gekennzeichnet,** daß die elektrisch leitenden Schichten des mehrlagigen Schichtkörpers, der auf der Oberfläche des oberflächlich zu erwärmenden Elements angeordnet ist, Papier- oder Kunststoffblätter sind, deren Fläche für die Kontaktierung mit dem polymeren festen Elektrolyten mit einem leitenden Überzug, wie z.B. einem Metallüberzug versehen ist.

22. Verfahren nach Anspruch 20, dadurch **gekennzeichnet,** daß der mehrlagige Schichtkörper auf der Oberfläche des oberflächlich zu erwärmenden Elements durch Anstrich gebildet wird.

23. Verfahren nach Anspruch 22, dadurch **gekennzeichnet,** daß die Oberfläche des oberflächlich zu erwärmenden Elements eine Elektronenleitfähigkeit aufweist, die ausreicht, um als Elektrode zu fungieren, und man allein auf diese Oberfläche die Schicht des polymeren festen Elektrolyten aufbringt und auf diese die entsprechende elektrisch leitende Schicht.

**Claims**

1. Process for rapidly and uniformly heating a multilayered assembly comprising at least one thin layer of an ionically conductive macromolecular material, or solid polymer electrolyte, interposed between two structures with high electronic conduction such that it is in intimate contact with said structures, said process being characterised in that there is applied between the structures with high electronic conduction, located on either side of each layer of ionically conductive macromolecular material, an electrical voltage signal of which at least part comprises an alternating component which has a frequency of less than 5 kHz and an amplitude, ie. a difference between its maximum and mean values, of between 0.05 and 100 volts, such that there is generated within the multi-layered assembly an alternating ionic current which can produce heating of the ionically conductive macromolecular material or solid polymer electrolyte by the Joule effect.

2. Process according to Claim 1, characterised in that the frequency of the alternating component of the electrical voltage signal applied between the structures with high electronic conduction is between 2 and 2000 Hz and is preferably between 10 and 500 Hz.

3. Process according to Claim 1 or Claim 2, characterised in that the amplitude of the alternating component of the electrical voltage signal applied between the structures with high electronic conduction is between 0.05 and 30 volts.

4. Process according to any one of Claims 1 to 3, characterised in that the alternating voltage component is a continuous signal and in particular a sinusoidal signal or even a discontinuous signal.

5. Process according to any one of Claims 1 to 4, characterised in that the temperature within the ionically conductive macromolecular material is controlled such that it does not exceed a predetermined temperature, the temperature being controlled either by the use of an electrical voltage signal of which the alternating component has a constant root mean square value and by the limitation of the intensity of the alternating current generated or by the maintaining constant of the intensity of the alternating current passing through the ionically conductive material and by the limitation of the amplitude of the alternating component of the electrical voltage signal.

6. Process according to any one of Claims 1 to 5, characterised in that the thin layer of ionically conductive macromolecular material of the multi-layered assembly is between 5 $\mu$m and 2000 $\mu$m thick.

7. Process according to any one of Claims 1 to 6, characterised in that the ionically conductive macromolecular material has both ionic conductivity of at least $10^{-7}$ siemens/cm at ambient temperature and electronic conductivity of less than $10^{-10}$ siemens/cm.

8. Process according to Claim 7, characterised in that the ionically conductive macromolecular material consists of a solid solution of at least one ionisable salt, in particular a salt of an alkali metal and in particular lithium salt, in a plastic polymer material formed at least partially of one or a plurality of polymers and/or copolymers of monomers comprising at least one heteroatom, in particular oxygen or nitrogen, suitable for forming bonds of the donor/acceptor type with the cation of the ionisable salt, said polymer(s) or copolymers(s) being in particular polyethers and in particular ethylene oxide or propylene oxide homopolymers or copolymers of ethylene oxide and of at least one other cyclic ether.

9. Process according to Claim 7, characterised in that the ionically conductive macromolecular material consists of a solid solution of a salt which can be ionised in a polymer selected from among the organometallic polymers in which at least two polyether chains are connected by a metal atom selected from Al, Zn, Mg, Si, Cd, B and Ti or from among the polyphosphazenes carrying two polyether groups and in particular two polyoxyethylene groups on each phosphorus atom.

10. Process according to Claim 7, characterised in that the ionically conductive macromolecular material is selected from mixtures of polymers of a polar and/or solvating nature with any salt, acid or base which is sufficiently dissociated in the polymer to obtain the desired ionic conductivity, the polymers carrying ionisable groups leading to anions or cations fixed on the macromolecular chains, the polymer protonic conductors and mixtures of inert polymers with mineral or organic ionically conductive materials dispersed in the polymer matrix.

11. Process according to any one of Claims 1 to 10, characterised in that the electronically conductive structures are made of materials having electronic conductivity which is greater than $10^{-8}$ siemens/cm.

12. Process according to any one of Claims 1 to 11, characterised in that the multi-layered assembly subjected to heating consists of a rechargeable or non-rechargeable electrochemical current generator, which is formed from at least one thin layer of the ionically conductive macromolecular material, or solid polymer electrolyte, sandwiched between two electrodes forming the structures with high electronic conduction.

13. Process according to Claim 12, characterised in that the electrochemical current generator is rechargeable or non-rechargeable; and in that the heating phase of the said generator is performed before it is used or at the beginning of its use.

14. Process according to Claim 13, characterised in that the electrical voltage used for heating is the resultant of the alternating voltage component and a direct voltage having a value which is at least equal to the voltage of the open-circuit generator.

15. Process according to Claim 14, characterised in that the said alternating and direct voltages are applied simultaneously and separately or in the form of a single voltage resulting from their superimposition.

16. Process according to Claim 12, characterised in that the electrochemical current generator is rechargeable; and in that the heating phase of the said generator is performed during at least part of the generator recharging cycle.

17. Process according to Claim 16, characterised in that the electrical voltage used for heating is the resultant of the alternating voltage component and a direct voltage having a value which is at least equal to the nominal voltage of the charged generator.

18. Process according to Claim 17, characterised in that the said alternating and direct voltages are applied simultaneously and separately or in the form of a single voltage resulting from their superimposition.

19. Process according to Claim 12, characterised in that a plurality of thin-layer electrochemical generators are associated to form the current generator ; and in that at least one of said electrochemical generators is used, possibly alternately, to produce the alternating voltage which can be used to heat the other generators.

20. Process according to any one of Claims 1 to 11, characterised in that the multi-layered assembly comprises a thin layer of the solid polymer electrolyte or ionically conductive macromolecular material interposed between two layers which can conduct electricity and constitute structures with high electronic conduction and is disposed on the surface of a component of any shape which is to be heated superficially; and in that the voltage applied between the structures with high electronic conduction is only alternating voltage.

21. Process according to Claim 20, characterised in that the electrically conductive layers of the multi-layered assembly disposed on the surface of the component to be superficially heated are sheets of paper or plastics material of which the face in contact with the solid polymer electrolyte is provided with a conductive deposit and, for example, with a metal deposit.

22. Process according to Claim 20, characterised in that the multi-layered assembly is formed by painting techniques on the surface of the component to be superficially heated.

23. Process according to Claim 22, characterised in that the surface of the component to be superficially heated has electronic conductivity which is sufficient for it to act as the electrode; and in that there is only deposited on said surface the solid polymer electrolyte layer and the corresponding electrically conductive layer is deposited on the latter.